# EUROPEAN PATENT APPLICATION

(11) **EP 3 260 435 A1**
(43) Date of publication of application: **27.12.2017**
(21) Application number: 16752299.4
(22) Date of filing: 04.02.2016
(51) Int. Cl.: C04B 38/00, B01D 39/20, B01D 46/00, C04B 38/06

(54) **METHOD FOR PRODUCING HONEYCOMB STRUCTURE**

(30) Priority: 16.02.2015 JP 2015027794
(71) Applicant: Ibiden Co., Ltd, Ogaki-shi, Gifu 503-8604 (JP)
(72) Inventor: IDO, Takahiko, Gifu 501-0695 (JP); ITO, Takahiro, Gifu 501-0695 (JP)
(74) Representative: Hoefer & Partner Patentanwälte mbB
(86) International application number: PCT/JP2016/053304
(87) International publication number: WO 2016/132912

(57) **Abstract**

The method for producing a honeycomb structured body of the present invention includes the steps of preparing a raw material composition using ceramic particles having a particle size distribution with a peak in each of the following three ranges, as measured based on laser diffractometry: a range of 0.1 µm or more and 1.0 µm or less; a range of more than 1.0 µm and 15 µm or less; and a range of more than 15 µm and 100 µm or less; and at least molding, degreasing, and firing the raw material composition to produce a porous ceramic honeycomb structured body.

## Description

### TECHNICAL FIELD

The present invention relates to a method for producing a honeycomb structured body.

### BACKGROUND ART

Exhaust gas emitted from internal combustion engines including diesel engines contains particulates such as soot (hereinafter also referred to as PM), and such PM has been an issue lately as it causes damage to the environment and human bodies. Since exhaust gas also contains toxic gas components such as CO, HC, and NOx, the impact of these toxic gas components on the environment and human bodies has also been a concern.

Thus, various honeycomb structures made of porous ceramics such as cordierite or silicon carbide have been proposed as exhaust gas purifying apparatuses. Such honeycomb structures are connected to internal combustion engines to capture PM in exhaust gas or to purify toxic gas components such as CO, HC, and NOx in exhaust gas.

Honeycomb structured bodies include a plurality of cells that serve as exhaust gas passages and porous cell partition walls defining the cells, wherein the cells include exhaust gas introduction cells each having an open end on the exhaust gas inlet side and a plugged end on the exhaust gas outlet side, and exhaust gas emission cells each having an open end on the exhaust gas outlet side and a plugged end on the exhaust gas inlet side. PM in exhaust gas that has flowed into these honeycomb structured bodies is captured by the cell partition walls, and the exhaust gas is thus purified (Patent Literature 1).

In addition, in order to improve fuel economy of internal combustion engines and to eliminate problems during driving attributable to an increase in pressure loss when such honeycomb structured bodies are used as filters, there is a demand for honeycomb structures in which the pressure loss is smaller. Thus, it is desired to increase the porosity of the cell partition walls or to make the cell partition walls thinner.

As used hereinafter, the simple term "cells" refers to both exhaust gas emission cells and exhaust gas introduction cells.

In addition, a cross section of the exhaust gas introduction cells and the exhaust gas emission cells in a direction perpendicular to a longitudinal direction of the cells may be simply referred to as a cross section of the exhaust gas introduction cells and the exhaust gas emission cells.

### CITATION LIST

### - Patent Literature

Patent Literature 1: Japanese Patent No. 4553737

### SUMMARY OF INVENTION

### - Technical Problem

Unfortunately, along with an increase in the porosity of the cell partition walls or a decrease in the thickness of the cell partition walls, the mechanical properties of the cell partition walls made of porous ceramics are likely to be decreased, and such honeycomb structured bodies are more susceptible to problems such as cracking during regeneration. Thus, there is a demand for honeycomb structured bodies resistant to thermal shock or the like during regeneration, capable of preventing the propagation of a crack, and having improved mechanical properties.

### - Solution to Problem

As a result of extensive studies in view of the above problems, the present inventors found that it is possible to produce a honeycomb structured body having improved mechanical properties and capable of preventing the propagation of a crack or the like by adding two different types of particles having a particle size of 15 µm or less and further adding particles having a larger particle size, as the large-sized grains prevent the propagation of a crack, improving the mechanical properties. Thus, the present invention was accomplished.

Specifically, the present invention provides a method for producing a honeycomb structured body, the method including the steps of: preparing a raw material composition using ceramic particles having a particle size distribution with a peak in each of the following three ranges, as measured based on laser diffractometry: a range of 0.1 µm or more and 1.0 µm or less; a range of more than 1.0 µm and 15 µm or less; and a range of more than 15 µm and 100 µm or less; and at least molding, degreasing, and firing the raw material composition to produce a porous ceramic honeycomb structured body.

Hereinafter, the ceramic particles having a particle size distribution with a peak in the range of 0.1 µm or more and 1.0 µm or less may be referred to as "microparticles"; the ceramic particles having a particle size distribution with a peak in the range of more than 1.0 µm and 15 µm or less may be referred to as "small particles"; and the ceramic particles having a particle size distribution with a peak in the range of more than 15 µm and 100 µm or less may be referred to as "large particles".

In the method for producing a honeycomb structured body, the large particles having a particle size distribution with a peak in the range of more than 15 µm and 100 µm or less are contained in the raw material composition. Because the honeycomb fired bodies constituting a honeycomb structured body each contain large-sized grains derived from the large particles in the raw material, when the honeycomb structured body produced is used as a filter to remove PM, the growth of cracks or the like from thermal shock during regeneration or the like is prevented. Therefore, the method can produce a honeycomb structured body having excellent mechanical properties and a high regeneration limit value.

In the method for producing a honeycomb structured body, the raw material composition is preferably prepared using a mixture of three types of ceramic particles having a particle size distribution as follows, as measured based on laser diffractometry: ceramic particles having a particle size distribution with a peak in a range of 0.1 µm or more and 1.0 µm or less; ceramic particles having a particle size distribution with a peak in a range of more than 1.0 µm and 15 µm or less; and ceramic particles having a particle size distribution with a peak in a range of more than 15 µm and 100 µm or less.

With the use of the three types of particles having different particle size distributions in the method for producing a honeycomb structured body, the properties of the ceramic particles such as composition and particle shape can be varied in each type, making it possible to control the mechanical properties of the honeycomb structured body to be produced.

In the method for producing a honeycomb structured body of the present invention, the ceramic particles having a particle size distribution with a peak in the range of more than 15 µm and 100 µm or less are preferably flat-shaped.

In the method for producing a honeycomb structured body, the produced honeycomb structured body contains large-sized, flat-shaped grains derived from the flat-shaped large particles in the raw material. Thus, the growth of a crack or the like from thermal shock due to regeneration or the like is more effectively prevented. Therefore, the method can produce a honeycomb structured body having excellent mechanical properties and a higher regeneration limit value.

In the method for producing a honeycomb structured body of the present invention, the ceramic particles having a particle size distribution with a peak in the range of more than 15 µm and 100 µm or less (large particles) preferably account for 10 to 60% by weight of all the ceramic particles.

In the method for producing a honeycomb structured body, when the large particles account for 10 to 60% by weight of all the ceramic particles, sintering is not interfered with the large particles and proceeds smoothly. Thus, the method can produce a honeycomb structured body having excellent mechanical properties and a higher regeneration limit value.

If the large particles account for less than 10% by weight of all the ceramic particles, the proportion of the large particles is too low, making it difficult to effectively prevent the growth of a crack or the like from thermal shock during regeneration, resulting in a low regeneration limit value.

In contrast, if the large particles account for more than 60% by weight of all the ceramic particles, the proportion of the large particles is too high, making sintering difficult, thus degrading the mechanical properties of the honeycomb structured body to be produced.

In the method for producing a honeycomb structured body of the present invention, the preparation of the raw material composition preferably include adding alumina or a combination of alumina and yttria as a sintering aid.

In the method for producing a honeycomb structured body, the use of the raw material composition containing alumina or a combination of alumina and yttria as a sintering aid promotes liquid phase sintering during firing. Thus, the method can produce a honeycomb structured body having better mechanical properties.

In the method for producing a honeycomb structured body of the present invention, the honeycomb structured body to be produced preferably has a porosity of 42 to 70%.

The method can produce a honeycomb structured body having excellent mechanical properties and capable of maintaining small pressure loss, when the honeycomb structured body to be produced has a porosity of 42 to 70%.

If the porosity of the honeycomb structured body to be produced is lower than 42%, it is too low, resulting in large initial pressure loss. Thus, even a small amount of accumulated PM is likely to increase the pressure loss.

In contrast, if the porosity of the honeycomb structured body to be produced is higher than 70%, it is too high so that PM can easily pass through the pores, resulting in low PM capturing efficiency and degrading the mechanical properties of the honeycomb structured body.

In the method for producing a honeycomb structured body of the present invention, the preparation of the raw material composition preferably includes adding at least one pore-forming agent selected from the group consisting of spherical acrylic particles, starch, graphite, and balloons of hollow microspheres.

In the method for producing a honeycomb structured body, when the pore-forming agent is added to the raw material composition, the pore-forming agent in the form of spherical acrylic particles or the like is burned and vanished by fire during a firing treatment and forms pores, or the pore-forming agent in the form of the balloons forms pores in the honeycomb structured body. Thus, the method can relatively easily produce a porous honeycomb structured body.

In the method for producing a honeycomb structured body of the present invention, the ceramic particles are preferably at least one selected from the group consisting of silicon carbide, silicon nitride, titanium carbide, tungsten carbide, molybdenum carbide, tantalum carbide, niobium carbide, vanadium carbide, zirconium carbide, titanium nitride, tantalum nitride, niobium nitride, vanadium nitride, and zirconium nitride.

The method for producing a honeycomb structured body can produce a honeycomb structured body having excellent heat resistance and mechanical properties when the ceramic particles are at least one selected from the group consisting of silicon carbide, silicon nitride, titanium carbide, tungsten carbide, molybdenum carbide, tantalum carbide, niobium carbide, vanadium carbide, zirconium carbide, titanium nitride, tantalum nitride, niobium nitride, vanadium nitride, and zirconium nitride.

In the method for producing a honeycomb structured body of the present invention, preferably, the honeycomb structured body to be produced includes a plurality of cells that serve as exhaust gas passages; and porous cell partition walls defining the cells, wherein the cells include exhaust gas introduction cells each having an open end on the exhaust gas inlet side and a plugged end on an exhaust gas outlet side, and exhaust gas emission cells each having an open end on an exhaust gas outlet side and a plugged end on the exhaust gas inlet side, the exhaust gas introduction cells each have an octagonal cross section and the exhaust gas emission cells each have a rectangular cross section in a direction perpendicular to a longitudinal direction of the cells of the honeycomb structured body, and the exhaust gas introduction cells each have a cross-sectional area larger than that of each exhaust gas emission cell.

When the honeycomb structured body to be produced by the method for producing a honeycomb structured body has the structure described above, the honeycomb structured body can exhibit sufficient performance as a filter.

### BRIEF DESCRIPTION OF DRAWINGS

Fig. 1(a) is an elevation view schematically showing an example of a bonding step in a method for producing a honeycomb structured body of the present invention. Fig. 1(b) is an elevation view schematically showing a honeycomb aggregated body produced in the bonding step.
Fig. 2 is a perspective view showing a honeycomb structured body produced by the method for producing a honeycomb structured body of the present invention.
Fig. 3(a) is a perspective view showing a honeycomb fired body that constitutes the honeycomb structured body. Fig. 3(b) is a cross-sectional view taken along line A-A of the honeycomb fired body shown in Fig. 3(a).
Fig. 4 is a scanning electron microscope (SEM) image showing a cut surface obtained by cutting a portion of a honeycomb fired body produced by the method for producing a honeycomb structured body of the present invention.
Fig. 5 is a SEM image showing observation results of a cracking portion where cracking was induced in a honeycomb fired body that constitutes a honeycomb structured body produced in Example 1.
Fig. 6 is an explanatory view schematically showing an exhaust gas purification device to measure a regeneration limit value.
Fig. 7 is a SEM image showing observation results of a cracking portion where cracking was induced in a honeycomb fired body that constitutes a honeycomb structured body produced in Comparative Example 1.
Fig. 8 is a graph showing particle size distribution results of mixtures of silicon carbide particles used in Example 1 and Comparative Example 1, as measured using a laser diffraction particle size distribution measuring device.

### DESCRIPTION OF EMBODIMENTS

A method for producing a honeycomb structured body of the present invention is described in detail below.

The method for producing a honeycomb structured body of the present invention includes the steps of: preparing a raw material composition using ceramic particles having a particle size distribution with a peak in each of the following three ranges, as measured based on laser diffractometry: a range of 0.1 µm or more and 1.0 µm or less; a range of more than 1.0 µm and 15 µm or less; and a range of more than 15 µm and 100 µm or less; and at least molding, degreasing, and firing the raw material composition to produce a porous ceramic honeycomb structured body.

For the method for producing a honeycomb structured body of the present invention, the description is mainly given for the following steps: a step of preparing a raw material composition using ceramic particles having a particle size distribution with peaks in the three ranges described above (raw material composition preparing step); a step of producing a honeycomb molded body using the prepared raw material composition (molded body producing step); a step of degreasing the honeycomb molded body produced in the molded body producing step (degreasing step); and a step of firing the degreased honeycomb molded body (firing step). Subsequently, the description is also given for optional steps such as a bonding step, a cutting step, and a peripheral coat layer forming step.

### (1) Raw material composition preparing step

In the raw material composition preparing step, additives such as an organic binder, a plasticizer, a lubricant, a liquid dispersion medium (water), and a pore-forming agent are optionally added to the ceramic particles described above, followed by mixing in a kneader or the like to prepare a raw material composition for a molded body production.

Examples of materials of the ceramic particles for use in the present invention include nitride ceramics such as aluminum nitride, silicon nitride, boron nitride, and titanium nitride; carbide ceramics such as zirconium carbide, titanium carbide, tantalum carbide, and tungsten carbide; a complex of a metal and nitride ceramics; and a complex of a metal and carbide ceramics. Any ceramic particles made of these various materials can be used.

Of these, silicon carbide is preferred because ceramics made of silicon carbide have excellent heat resistance and mechanical properties. Hereinafter, the description is mainly given for the case where the ceramic particles are silicon carbide. Yet, other type(s) of ceramic particles may be used to prepare the raw material composition. Silicon carbide particles may be combined with other type(s) of particles.

In the present invention, the silicon carbide particles are ceramic particles having a particle size distribution with a peak in each of the following three ranges, as measured based on laser diffractometry: a range of 0.1 µm or more and 1.0 µm or less; a range of more than 1.0 µm and 15 µm or less; and a range of more than 15 µm and 100 µm or less.

When particles are irradiated with laser beam (monochromatic light), diffraction light and scattering light are emitted in various directions depending on the size of each particle. A particle size distribution measuring device based on laser diffractometry analyzes a distribution of diffraction/scattering intensity of these lights to determine the particle size. The device can measure the particle size by both wet and dry methods. In the present invention, the particle size distribution is determined by the wet method. In the present invention, for example, Mastersizer 2000 available from Malvern Instruments can be used to determine the particle size distribution.

Measurement conditions are as follows: sample measurement time: 7 to 10 seconds; background time: 4 seconds; number of measurement cycles: 1; pump speed: 2000 to 2500 rpm; ultrasonic displacement: 20.00; and ultrasonic timer: 5 minutes.

For measurement of the particle size distribution, a dispersion is prepared using sodium hexametaphosphate as a dispersant in such a manner that the concentration of the ceramic particles is 0.02% by weight.

The following procedure is performed for measurement.

### (1) Stirring of dispersion

The dispersion is ultrasonically stirred for five minutes before the ceramic particles are charged into the dispersion.

### (2) Implementation of background

Various conditions are adjusted by software based on the state of the dispersion or the like.

### (3) Charging of ceramic particles

The ceramic particles are gradually charged into the dispersion while the dispersion is stirred for five minutes. The charging is terminated when the scattered light intensity reaches 13 ± 2%.

### (4) Implementation of measurement

The prepared dispersion containing the ceramic particles is measured.

### (5) Checking of measurement results

The measurement results displayed upon termination of measurement are confirmed.

The particle size distribution may be measured using ceramic particles having a particle size distribution with a peak in each of the following three ranges, as measured based on laser diffractometry: a range of 0.1 µm or more and 1.0 µm or less; a range of more than 1.0 µm and 15 µm or less; and a range of more than 15 µm and 100 µm or less. Alternatively, the following three types of ceramic particles may be measured separately for particle size distribution: ceramic particles having a particle size distribution with a peak in a range of 0.1 µm or more and 1.0 µm or less; ceramic particles having a particle size distribution with a peak in a range of more than 1.0 µm and 15 µm or less; and ceramic particles having a particle size distribution with a peak in a range of more than 15 µm and 100 µm or less.

The method for obtaining the silicon carbide particles is not particularly limited. Yet, usually, it is possible to obtain ceramic particles having a particle size distribution with a peak in each of the above three ranges by mixing the following three types of ceramic particles after measurement of the particle size distribution by the method described above: ceramic particles having a particle size distribution with a peak in the range of 0.1 µm or more and 1.0 µm or less (microparticles); ceramic particles having a particle size distribution with a peak in the range of more than 1.0 µm and 15 µm or less (small particles); and ceramic particles having a particle size distribution with a peak in the range of more than 15 µm and 100 µm or less (large particles).

With the use of the three types of particles having different particle size distributions, the properties of the ceramic particles such as composition and particle shape can be varied in each type, making it possible to control the mechanical properties of the honeycomb structured body to be produced.

The large particles are preferably flat-shaped silicon carbide particles. When the honeycomb fired body is produced by firing, large-sized, flat-shaped grains derived from the flat-shaped silicon carbide particles in the raw material are formed in the honeycomb fired body. Even when a crack or the like is generated, the growth of the crack is prevented because a large amount of energy is consumed as the crack diverts these large-sized grains. Thus, the produced honeycomb fired body has excellent mechanical properties.

The large particles may be particles made of a material different from silicon carbide. For example, the large particles may be made of silicon nitride.

The large particles preferably account for 10 to 60% by weight of all the ceramic particles.

If the large particles account for less than 10% by weight of all the ceramic particles, the proportion of the large particles is too low, making it difficult to effectively prevent the growth of a crack or the like from thermal shock during regeneration, resulting in a low regeneration limit value.

In contrast, if the large particles account for more than 60% by weight of all the ceramic particles, the proportion of the large particles is too high, making sintering difficult, thus degrading the mechanical properties of the honeycomb structured body to be produced.

Examples of the organic binder to be added to the raw material composition include methyl cellulose, carboxymethyl cellulose, hydroxyethyl cellulose, polyethylene glycol, phenolic resin, and epoxy resin. Of these, methyl cellulose is preferred.

Examples of the liquid dispersion medium include organic solvents such as alcohol (e.g., methanol) and benzene, and water.

Non-limiting examples of the plasticizer include glycerol.

Non-limiting examples of the lubricant include polyoxyalkylene compounds such as polyoxyethylene alkyl ethers and polyoxypropylene alkyl ethers. Specific examples of the lubricant include polyoxyethylene monobutyl ether and polyoxypropylene monobutyl ether.

Examples of the pore-forming agent include spherical acrylic particles, graphite, and balloons that are hollow microspheres. Specific examples of the balloons include silica balloons, glass microballoons, shirasu balloons, fly ash balloons (FA balloons), and mullite balloons. The use of these pore-forming agents facilitates control of the porosity of the honeycomb structured body to be produced.

The preparation of the raw material composition may include adding alumina, a combination of alumina and yttria, or the like as a sintering aid. The addition of the sintering aid promotes liquid phase sintering during firing. Thus, the method can produce a honeycomb structured body having better mechanical properties.

The amount of the sintering aid is preferably 0.1 to 10.0 parts by weight relative to 100 parts by weight of the ceramic particles.

### (2) Molded body producing step

In the molded body producing step, the prepared raw material composition is extruded into a honeycomb molded body in which a large number of through holes are arranged in parallel in the extrusion direction.

In this step, the obtained raw material composition is fed into an extruder provided with a molding die and is extruded into a continuous body. Then, the continuous body is cut into a predetermined length. Thus, a raw honeycomb molded body in which a large number of through holes are arranged in parallel in a longitudinal direction can be produced.

Next, this raw honeycomb molded body is dried using a microwave dryer, a hot air dryer, a dielectric dryer, a reduced-pressure dryer, a vacuum dryer, a freeze dryer, or the like. The honeycomb molded body may be dried using a microwave dryer and a hot air dryer concurrently. Alternatively, the honeycomb molded body may be dried using a microwave dryer until the moisture content is reduced to a certain point and subsequently using a hot air dryer to completely remove the moisture in the honeycomb molded body.

Next, a predetermined amount of a plug material paste is placed at one of the ends of each cell constituting the dried honeycomb molded body to plug the cells. For plugging of the cells, for example, a mask for plugging the cells is abutted to the end faces (i.e., cut surfaces obtained by cutting the both ends) of the honeycomb molded body, the plug material paste is placed only in the cells that need to be plugged, and the plug material paste is dried. Through the above steps, a honeycomb molded body in which each cell is plugged at one end can be produced.

### (3) Degreasing step

Next, the honeycomb molded body after the plugging step is heated at 300°C to 650°C in an oxidizing atmosphere such as air for 0.5 to 3 hours to remove organic matter in the honeycomb molded body. Thus, a degreased honeycomb body is produced.

### (4) Firing step

The degreased honeycomb molded body obtained in the degreasing step is fired at 1800°C to 2200°C for 0.5 to 4 hours in an inert gas atmosphere such as nitrogen or argon atmosphere. Thus, a porous honeycomb fired body is produced.

The honeycomb fired body to be produced may have any shape, such as a rectangular pillar shape, a round pillar shape, or an elliptical pillar shape. Alternatively, the produced honeycomb fired body can be directly used as a honeycomb structured body. However, in the case where the ceramic particles are silicon carbide, it is preferred to produce a honeycomb structured body by a method including bonding a plurality of produced honeycomb fired bodies with an adhesive layer therebetween to produce a honeycomb aggregated body, cutting the honeycomb aggregated body into a honeycomb block of a predetermined shape, and forming a peripheral coat layer on the periphery of the honeycomb block. The above method is preferred because, in the case where the ceramic particles are silicon carbide particles, it is difficult to produce a honeycomb fired body that is large enough to be usable as a honeycomb filter.

Therefore, the bonding step, cutting step, and peripheral coat layer forming step are also described below.

### (5) Bonding step

In the bonding step, one of the honeycomb fired bodies produced through the above steps is placed on a placement table having a V-shaped depression, and an adhesive paste is applied to at least one side of the honeycomb fired body, and another honeycomb fired body is placed thereon. This procedure is repeated to produce a temporarily bonded aggregated body in which a plurality of the honeycomb fired bodies are temporarily bonded with an adhesive paste layer therebetween, and the temporarily bonded aggregated body is dried. As a result, a honeycomb aggregated body in which a plurality of the honeycomb fired bodies are bonded with an adhesive layer therebetween is produced.

The adhesive paste may be, for example, a mixture of an inorganic binder, an organic binder, and inorganic fibers and/or inorganic particles.

Next, the bonding step (5) is described in more detail, with reference to the drawings.

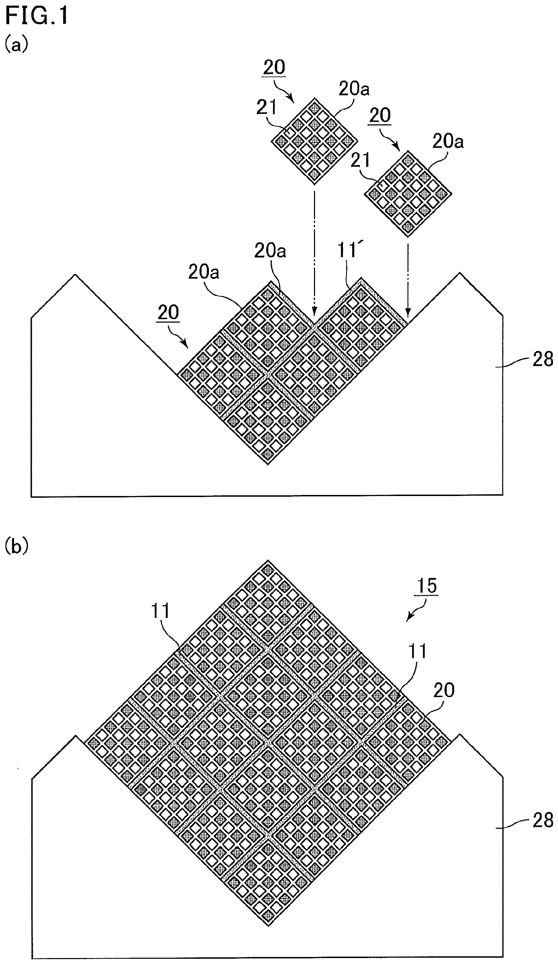

Fig. 1(a) is an elevation view schematically showing an example of the bonding step in the method for producing a honeycomb structured body of the present invention. Fig. 1(b) is an elevation view schematically showing a honeycomb aggregated body produced in the bonding step.

In the bonding step, as shown in Fig. 1(a), a honeycomb fired body 20 produced through the above steps is placed on a placement table 28 having a V-shaped depression, and an adhesive paste is applied to at least one side 20a of the honeycomb fired body 20, and anther honeycomb fired body 20 is placed thereon. This procedure is repeated to produce a temporarily bonded aggregated body in which a plurality of the honeycomb fired bodies 20 are temporarily bonded with an adhesive paste layer 11' therebetween, and the temporarily bonded aggregated body is dried. As a result, as shown in Fig. 1(b), a honeycomb aggregated body 15 in which the honeycomb fired bodies 20 are bonded with an adhesive layer 11 therebetween is produced.

The adhesive paste may be, for example, a mixture of an inorganic binder, an organic binder, and inorganic fibers and/or inorganic particles.

### (6) Cutting step

Subsequently, a tool such as a diamond cutter is used to cut the honeycomb aggregated body 15 into a ceramic block having, for example, a round pillar shape.

### (7) Peripheral coat layer forming step

A peripheral coat material paste is applied to the periphery of the ceramic block produced through the above steps, and the peripheral coat material paste is solidified by drying into a peripheral coat layer, whereby the production of a honeycomb structured body is completed. The peripheral coat material paste may be the same as the adhesive paste.

In the honeycomb structured body produced by the above production method, a plurality of the porous honeycomb fired bodies made of silicon carbide are combined together with the adhesive layer therebetween to form a round pillar-shaped ceramic block, and the peripheral coat layer is formed around the ceramic block.

An example of a specific structure is as follows.

Specifically, the honeycomb fired bodies that constitute the honeycomb structured body each have a rectangular pillar shape and include a plurality of cells that serve as exhaust gas passages, porous cell partition walls defining the cells, and an outer wall. The cells include exhaust gas introduction cells each having an open end on the exhaust gas inlet side and a plugged end on an exhaust gas outlet side, and exhaust gas emission cells each having an open end on an exhaust gas outlet side and a plugged end on the exhaust gas inlet side, the exhaust gas introduction cells each have an octagonal cross section and the exhaust gas emission cells each have a rectangular cross section in a direction perpendicular to a longitudinal direction of the cells of the honeycomb fired bodies, and the exhaust gas introduction cells each have a cross-sectional area larger than that of each exhaust gas emission cell.

In the honeycomb fired body having the above structure, the cell partition walls each separating one exhaust gas introduction cell from one exhaust gas emission cell function as filters. Exhaust gas that has flowed into the exhaust gas introduction cells each having an open end on the exhaust gas inlet side and a plugged end on the exhaust gas outlet side inevitably passes through the cell partition walls, and flows out from the exhaust gas emission cells each having an open end on the exhaust gas outlet side and a plugged end on the exhaust gas inlet side. PM in the exhaust gas is removed as it accumulates on the cell partition walls, whereby the exhaust gas is purified.

A specific structure of the honeycomb structured body is described with reference to the drawings.

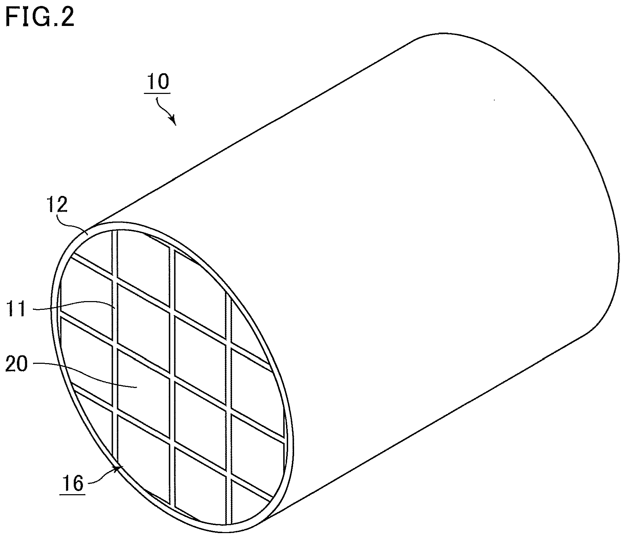

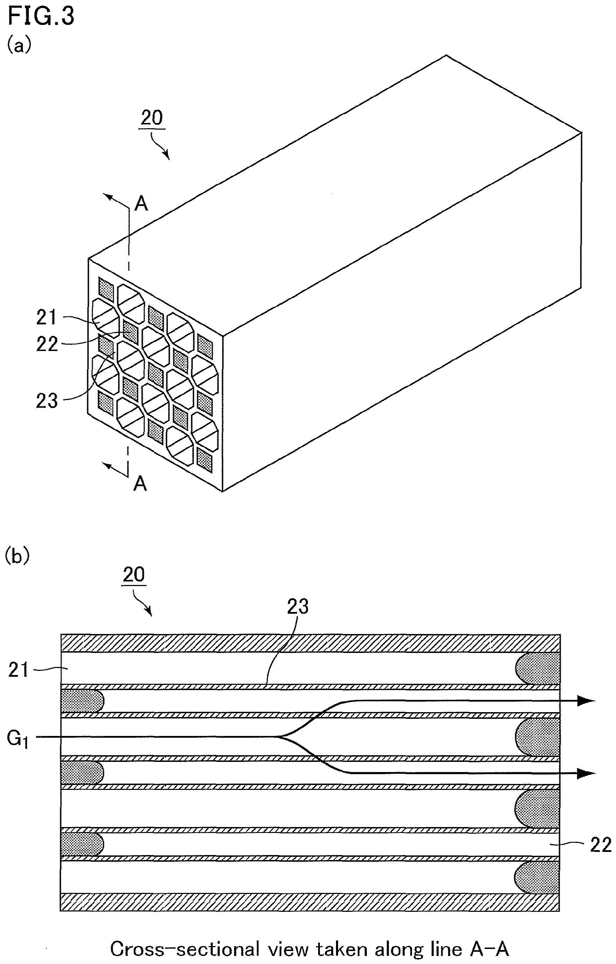

Fig. 2 is a perspective view showing a honeycomb structured body produced by the method for producing a honeycomb structured body of the present invention. Fig. 3(a) is a perspective view showing a honeycomb fired body that constitutes the honeycomb structured body. Fig. 3(b) is a cross-sectional view taken along line A-A of the honeycomb fired body shown in Fig. 3(a).

As shown in Fig. 2, in a honeycomb structured body 10, a plurality of the porous honeycomb fired bodies 20 made of silicon carbide are combined together with the adhesive layer 11 therebetween to form a round pillar-shaped ceramic block 16, and a peripheral coat layer 12 is formed around the ceramic block 16.

As shown in Fig. 3, each honeycomb fired body 20 that constitutes the honeycomb structured body 10 has a rectangular pillar shape and includes a plurality of cells 21, 22 that serve as exhaust gas passages, porous cell partition walls 23 defining the cells 21, 22, and an outer wall. The cells include exhaust gas introduction cells 21 each having an open end on the exhaust gas inlet side and a plugged end on the exhaust gas outlet side, and exhaust gas emission cells 22 each having an open end on the exhaust gas outlet side and a plugged end on the exhaust gas inlet side, the exhaust gas introduction cells 21 each have an octagonal cross section and the exhaust gas emission cells 22 each have a rectangular cross section in a direction perpendicular to a longitudinal direction of the cells of the honeycomb fired body 20, and the exhaust gas introduction cells 21 each have a cross-sectional area larger than that of each exhaust gas emission cell 22.

In the honeycomb fired body 20 having the above structure, each cell partition wall 23 separating one exhaust gas introduction cell 21 from one exhaust gas emission cell 22 functions as a filter. Exhaust gas that has flowed into the exhaust gas introduction cells 21 each having an open end on the exhaust gas inlet side and a plugged end on the exhaust gas outlet side inevitably passes through the cell partition walls 23, and flows out from the exhaust gas emission cells 22 each having an open end on the exhaust gas outlet side and a plugged end on the exhaust gas inlet side. PM in the exhaust gas is removed as it accumulates on the cell partition walls, whereby the exhaust gas is purified.

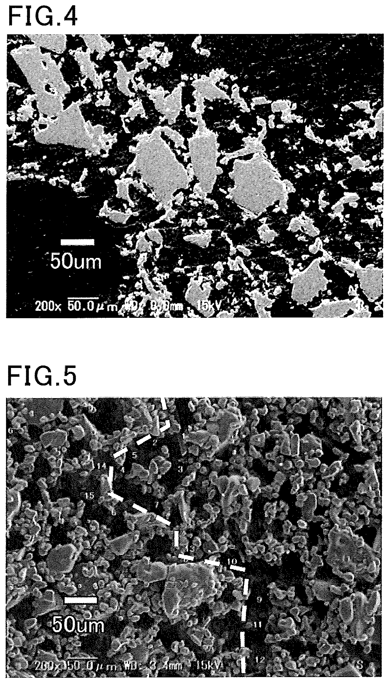

Fig. 4 is a scanning electron microscope (SEM) image showing a cut surface obtained by cutting a portion of a honeycomb fired body produced by the method for producing a honeycomb structured body of the present invention. Fig. 5 is a SEM image showing observation results of a cracking portion where cracking was induced in a honeycomb fired body that constitutes a honeycomb structured body produced in Example 1.

As shown in Fig. 4, small-sized grains and large-sized grains are observed in the structure of the honeycomb fired body. The small-sized grains are assumed to be derived from the particles having a particle size distribution with a peak in the range of 0.1 µm or more and 1.0 µm or less (microparticles) and the particles having a particle size distribution with a peak in the range of more than 1.0 µm and 15 µm or less (small particles) in the raw material. The large-sized grains are assumed to be derived from the particles having a particle size distribution with a peak in the range of more than 15 µm and 100 µm or less (large particles) in the raw material.

Thus, as shown in Fig. 5, observation of cracking in the honeycomb fired body reveals a crack that is not straight but is largely bent so as to divert the large-sized grains. A large amount of energy is necessary to induce cracking around the large-sized grains, and thus such a crack is less likely to grow. Therefore, the honeycomb fired bodies of the present invention have a higher regeneration limit value than conventional honeycomb fired bodies, and are more resistant to breakage during regeneration even after accumulation of a larger amount of PM.

In each honeycomb fired body constituting the honeycomb structured body produced by the method of the present invention, the cell partition wall thickness is preferably 0.075 mm to 0.400 mm.

By making the cell partition walls as thin as 0.075 mm to 0.400 mm, it is possible to reduce the passage resistance upon passage of exhaust gas through the cell partition walls, resulting in smaller pressure loss.

If the cell partition wall thickness is less than 0.075 mm, the cell partition walls are too thin, resulting in low mechanical strength of the honeycomb structured body. In contrast, if the cell partition wall thickness is more than 0.400 mm, the cell partition walls are thick, resulting in large pressure loss upon passage of exhaust gas through the cell partition walls.

In each honeycomb fired body constituting the honeycomb structured body produced by the method of the present invention, the porosity of the cell partition walls is preferably 42 to 70%.

When the porosity of the cell partition walls is 42 to 70%, the cell partition walls can successfully capture PM in exhaust gas, and an increase in pressure loss due to the cell partition walls can be controlled. Thus, the initial pressure loss is small and the pressure loss does not easily increase even after accumulation of PM in the honeycomb structured body.

If the cell partition walls have a porosity lower than 42%, the percentage of pores in the cell partition walls is too small, so that exhaust gas cannot smoothly pass through the cell partition walls, resulting in large pressure loss upon passage of exhaust gas through the cell partition walls. In contrast, if the cell partition walls have a porosity higher than 70%, the cell partition walls have low mechanical properties and are thus susceptible to cracking during regeneration or the like. The pore diameter and the porosity are measured by mercury porosimetry with a contact angle of 130° and a surface tension of 485 mN/m.

In each honeycomb fired body constituting the honeycomb structured body produced by the method of the present invention, the pores in the cell partition walls preferably have an average pore diameter of 8 to 25 µm.

The honeycomb structured body having the above structure can capture PM at a high capturing efficiency while an increase in pressure loss is controlled. If the average pore diameter of the pores in the cell partition walls is less than 8 µm, the pores are too small, resulting in large pressure loss upon passage of exhaust gas through the cell partition walls. In contrast, if the average pore diameter of the pores in the cell partition walls is more than 25 µm, the pores are too large, resulting in low PM capturing efficiency.

The number of cells per unit area in a cross section perpendicular to the longitudinal direction of the cells of the honeycomb fired bodies constituting the honeycomb structured body produced by the method of the present invention is preferably 31 to 62 pcs/cm² (200 to 400 pcs/inch²).

### EXAMPLE

An example that more specifically discloses a first embodiment of the present invention is described below. The present invention is not limited to the example below.

### (Example 1)

### (1) Production of honeycomb fired body

First, in the raw material composition preparing step, 25.6% by weight of silicon carbide large particles (YB-70 µm available from Yakushima Denko Co., Ltd.) having an average particle diameter of 70 µm, 13.1% by weight of silicon carbide small particles (GP #1500 available from Shinano Electric Refining Co., Ltd.) having an average particle diameter of 10 µm, and 16.6% by weight of silicon carbide microparticles (GC-15 available from Yakushima Denko Co., Ltd.) having an average particle diameter of 0.5 µm were mixed. The obtained mixture was then blended with 5.7% by weight of organic binder (methyl cellulose), 2.9% by weight of lubricant (UNILUBE available from NOF Corporation), 1.5% by weight of glycerol, 11.8% by weight of pore-forming agent (acrylic resin), 2.8% by weight of alumina, and 20.0% by weight of water, followed by kneading. Thus, a raw material composition was obtained.

Subsequently, the obtained raw material composition was extruded into a raw honeycomb molded body. Next, a microwave dryer was used to dry the raw honeycomb molded body to produce a dried honeycomb molded body.

Then, a plug material paste was placed in predetermined cells of the dried honeycomb molded body to plug the cells. Thus, a honeycomb molded body was obtained. The raw material composition was used as a plug material paste for plugging. After plugging the cells, the dried honeycomb molded body with the plug material paste placed therein was dried again using a dryer.

Subsequently, a plurality of the dried honeycomb molded bodies were carried into a degrease furnace. The temperature was raised to 400°C in air under normal pressure and then the heating was stopped to degrease the dried honeycomb molded bodies. Thereafter, the degreased honeycomb molded bodies were carried into a firing furnace, and fired at 2200°C in an argon atmosphere under normal pressure for three hours. Thus, honeycomb fired bodies were produced.

The produced honeycomb fired body was a porous silicon carbide sintered body in which the porosity was 58.9%, the average pore diameter was 16.5 µm, the size was 34.3 mm × 34.3 mm × 150 mm, the number of cells (cell density) was 31 pcs/cm² (250 pcs/inch²), the cell partition wall thickness was 0.3556 mm, and the outer wall thickness was 0.3 mm.

### (2) Production of honeycomb structured body

A honeycomb structured body was produced using the honeycomb fired bodies obtained through the above steps.

An adhesive paste was applied to at least one predetermined side of a honeycomb fired body 1, and 36 honeycomb fired bodies (6 pieces (vertical) × 6 pieces (horizontal)) were bonded together with the adhesive paste therebetween. Thus, an aggregate of the honeycomb fired bodies was produced.

Further, the aggregate of the honeycomb fired bodies was heated at 180°C for 20 minutes to solidify the adhesive paste by drying. Thus, a rectangular pillar-shaped ceramic block having a 1-mm thick adhesive layer was produced.

Subsequently, a diamond cutter was used to cut the periphery of the rectangular pillar-shaped ceramic block into a round pillar-shaped ceramic block having a diameter of 198 mm.

Next, a peripheral coat material paste was applied to the periphery of the round pillar-shaped ceramic block, and the peripheral coat material paste was solidified by heating at 120°C. Thus, a 1.0-mm thick peripheral coat layer was formed on the periphery of the ceramic block. The adhesive paste was used as a peripheral coat material paste.

Through the above steps, a honeycomb structured body having a size of 200 mm (diameter) × 150 mm (length) was produced.

### (Comparative Example 1)

### (1) Production of honeycomb fired body

First, 38.7% by weight of silicon carbide coarse particles having an average particle diameter of 8 µm and 16.6% by weight of silicon carbide fine particles having an average particle diameter of 0.5 µm were mixed. The obtained mixture was then blended with 5.7% by weight of organic binder (methyl cellulose), 2.9% by weight of lubricant (UNILUBE available from NOF Corporation), 1.5% by weight of glycerol, 11.8% by weight of pore-forming agent (acrylic resin), 2.8% by weight of alumina, and 20.0% by weight of water, followed by kneading. Thus, a raw material composition was obtained.

Subsequently, in the molded body producing step, the obtained raw material composition was extruded to obtain a raw honeycomb molded body. Next, a microwave dryer was used to dry the honeycomb molded body to produce a dried honeycomb molded body.

Then, a plug material paste was placed in predetermined cells of the dried honeycomb molded body to plug the cells. Thus, a honeycomb molded body was obtained. The raw material composition was used as the plug material paste for plugging. After plugging the cells, the dried honeycomb molded body with the plug material paste placed therein was dried again using a dryer.

Subsequently, a plurality of the dried honeycomb molded bodies were carried into a degrease furnace. The temperature was raised to 400°C in air under normal pressure and then the heating was stopped to degrease the dried honeycomb molded bodies. Thereafter, the degreased honeycomb molded bodies were carried into a firing furnace, and fired at 2200°C in an argon atmosphere under normal pressure for three hours. Thus, honeycomb fired bodies were produced.

The produced honeycomb fired bodies were porous silicon carbide sintered bodies in each of which the porosity was 61.8%, the average pore diameter was 12 µm, the size was 34.3 mm × 34.3 mm × 150 mm, the number of cells (cell density) was 31 pcs/cm² (250 pcs/inch²), the cell partition wall thickness was 0.3556 mm, and the outer wall thickness was 0.3 mm.

### (2) Production of honeycomb structured body

A honeycomb structured body was produced in the same manner as in Example 1, using the honeycomb fired bodies obtained through the above steps.

### (Evaluation)

### (1) Measurement of particle size distribution

The large particles, small particles, and microparticles of silicon carbide used in Example 1 were measured for particle size distribution using a laser diffraction particle size distribution measuring device (Mastersizer 2000 available from Malvern Instruments). The coarse particles and fine particles of silicon carbide used in Comparative Example 1 were also measured for particle size distribution using a laser diffraction particle size distribution measuring device (Mastersizer 2000 available from Malvern Instruments).

Measurement conditions were as follows: sample measurement time: 10 seconds; background time: 4 seconds; number of measurement cycles: 1; pump speed: 2500 rpm; ultrasonic displacement: 20.00; and ultrasonic timer: 5 minutes. In the case of the microparticles, the sample measurement time was 7 seconds and the pump speed was 2000 rpm.

For measurement of the particle size distribution, a dispersion was prepared using sodium hexametaphosphate as a dispersant in such a manner that the concentration of the silicon carbide particles was 0.02% by weight.

The following procedure was performed for measurement.

### (i) Stirring of dispersion

The dispersion was ultrasonically stirred for five minutes before the silicon carbide particles were charged into the dispersion. (ii) Implementation of background

Various conditions were adjusted by software based on the state of the dispersion or the like.

### (iii) Charging of silicon carbide particles

The silicon carbide particles were gradually charged into the dispersion while the dispersion was stirred for five minutes. The charging was terminated when the scattered light intensity reached 13 ± 2%.

### (iv) Implementation of measurement

The prepared dispersions containing the silicon carbide particles were each measured for particle size distribution after the above procedure.

### (v) Checking of measurement results

The measurement results displayed upon termination of the measurement were confirmed.

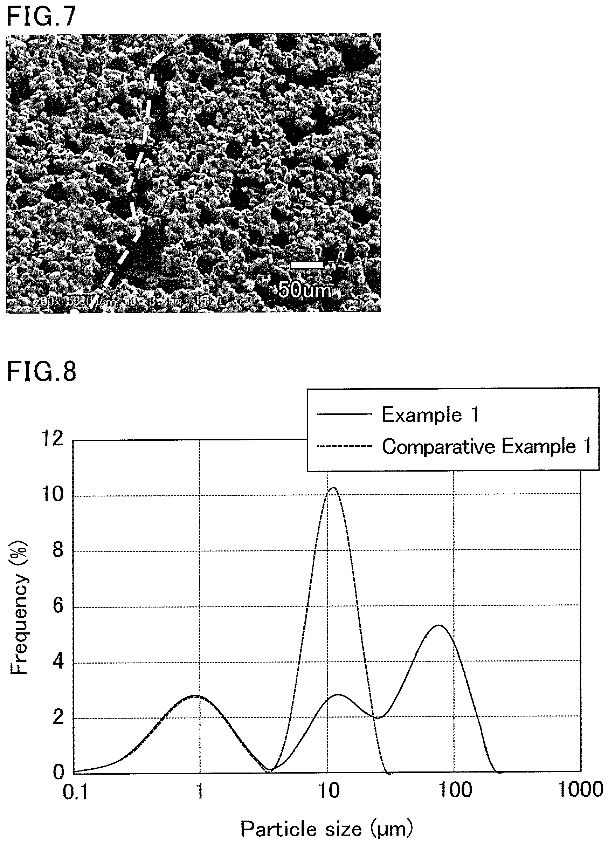

Fig. 8 is a graph showing particle size distribution measurement results. For Example 1, the measurement results of the large particles, small particles, and microparticles were added together in proportion to their amounts in the raw material mixture to create a particle size distribution graph. Likewise for Comparative Example 1, the measurement results of the coarse particles and fine particles were added together in proportion to their amounts in the raw material mixture to create a particle size distribution graph.

As a result, as shown in Fig. 8, the particles of Example 1 have a particle size distribution with a peak in each of the following ranges, as designed: a range of 0.1 µm or more and 1.0 µm or less; a range of more than 1.0 µm and 15 µm or less; and a range of more than 15 µm and 100 µm or less. The particles of Comparative Example 1 have a particle size distribution with a peak in each of the following ranges: a range of 0.1 µm to 1.0 µm; and a range of 1.0 to 15 µm.

Table 1 and Table 2 show the data from the particle size distribution measurement results in Example 1 and Comparative Example 1.

**[Table 1]**

| Particle size (µm) | Frequency (%) | |
|---|---|---|
| | Example 1 | Comparative Example 1 |
| 0.011659 | 0 | 0 |
| 0.013594 | 0 | 0 |
| 0.015849 | 0 | 0 |
| 0.018478 | 0 | 0 |
| 0.021544 | 0 | 0 |
| 0.025119 | 0 | 0 |
| 0.029286 | 0 | 0 |
| 0.034145 | 0 | 0 |
| 0.039811 | 0 | 0 |
| 0.046416 | 0 | 0 |
| 0.054117 | 0.01086 | 0.01086 |
| 0.063096 | 0.02578 | 0.02578 |
| 0.073564 | 0.03941 | 0.03941 |
| 0.08577 | 0.06389 | 0.06389 |
| 0.1 | 0.09073 | 0.09073 |
| 0.116591 | 0.12537 | 0.12537 |
| 0.135936 | 0.16944 | 0.16944 |
| 0.158489 | 0.22761 | 0.22761 |
| 0.184785 | 0.30611 | 0.30611 |
| 0.215443 | 0.41564 | 0.41564 |
| 0.251189 | 0.60016 | 0.57166 |
| 0.292864 | 0.8429 | 0.7859 |
| 0.341455 | 1.12774 | 1.05934 |
| 0.398107 | 1.45222 | 1.38382 |
| 0.464159 | 1.81158 | 1.73748 |
| 0.54117 | 2.15539 | 2.08699 |
| 0.630957 | 2.4571 | 2.3944 |
| 0.735642 | 2.68013 | 2.62313 |
| 0.857696 | 2.79359 | 2.74229 |
| 1 | 2.781 | 2.7297 |
| 1.165914 | 2.62532 | 2.57972 |
| 1.359356 | 2.35086 | 2.30526 |
| 1.584893 | 1.98369 | 1.93239 |
| 1.84785 | 1.55442 | 1.50312 |
| 2.154435 | 1.12596 | 1.06896 |
| 2.511886 | 0.73591 | 0.66751 |
| 2.928645 | 0.41152 | 0.32602 |
| 3.414549 | 0.13578 | 0.02748 |
| 3.981072 | 0.20026 | 0.28034 |
| 4.641589 | 0.41818 | 1.14681 |
| 5.411695 | 0.76839 | 2.60286 |
| 6.309573 | 1.22702 | 4.58136 |
| 7.356423 | 1.75701 | 6.7906 |
| 8.576959 | 2.2508 | 8.77424 |
| 10 | 2.62765 | 10.0361 |

**[Table 2]**

| Particle size (µm) | Frequency (%) | |
|---|---|---|
| | Example 1 | Comparative Example 1 |
| 11.659144 | 2.80346 | 10.2155 |
| 13.593564 | 2.75847 | 9.23662 |
| 15.848932 | 2.54518 | 7.35151 |
| 18.478498 | 2.27112 | 5.04711 |
| 21.544347 | 2.0597 | 2.92654 |
| 25.118864 | 1.95466 | 1.01046 |
| 29.286446 | 2.1147 | 0 |
| 34.145489 | 2.5935 | 0 |
| 39.810717 | 3.1863 | 0 |
| 46.415888 | 3.8532 | 0 |
| 54.116953 | 4.5087 | 0 |
| 63.095734 | 5.0274 | 0 |
| 73.564225 | 5.2782 | 0 |
| 85.76959 | 5.1585 | 0 |
| 100 | 4.6455 | 0 |
| 116.59144 | 3.8019 | 0 |
| 135.935639 | 2.7645 | 0 |
| 158.489319 | 1.7556 | 0 |
| 184.78498 | 0.5586 | 0 |
| 215.443469 | 0 | 0 |
| 251.188643 | 0 | 0 |
| 292.864456 | 0 | 0 |
| 341.454887 | 0 | 0 |
| 398.107171 | 0 | 0 |
| 464.158883 | 0 | 0 |
| 541.169527 | 0 | 0 |
| 630.957344 | 0 | 0 |
| 735.642254 | 0 | 0 |
| 857.695899 | 0 | 0 |
| 1000 | 0 | 0 |
| 1165.9144 | 0 | 0 |
| 1359.35639 | 0 | 0 |
| 1584.89319 | 0 | 0 |
| 1847.8498 | 0 | 0 |
| 2154.43469 | 0 | 0 |
| 2511.88643 | 0 | 0 |
| 2928.64457 | 0 | 0 |
| 3414.54887 | 0 | 0 |
| 3981.07171 | 0 | 0 |
| 4641.58883 | 0 | 0 |
| 5411.69527 | 0 | 0 |
| 6309.57345 | 0 | 0 |
| 7356.42255 | 0 | 0 |
| 8576.95899 | 0 | 0 |
| 10000 | 0 | 0 |

### (2) Measurement of regeneration limit value

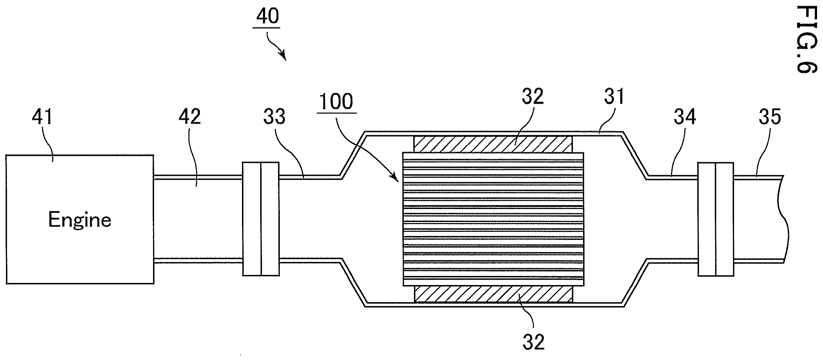

Fig. 6 is an explanatory view schematically showing an exhaust gas purification device to measure a regeneration limit value.

As shown in Fig. 6, an exhaust gas purification device 40 has a structure including a honeycomb structured body 100 in a metal casing 31 with an inorganic fiber mat 32 therebetween, wherein an exhaust gas inlet-side pipe 33 of the casing is configured to be connected to an exhaust gas passage 42 of an engine 41, and an exhaust gas outlet-side pipe 34 is configured to be connected to a pipe 35 for discharging exhaust gas to the outside.

It should be noted that, instead of the honeycomb structured bodies produced in Example 1 and Comparative Example 1, the honeycomb fired bodies according to Example 1 and Comparative Example 1 which constitute the honeycomb structured bodies were each placed in the exhaust gas purification device to measure the regeneration limit value. Since a honeycomb structured body is an aggregate of a plurality of honeycomb fired bodies, it is possible to determine properties of the honeycomb structured body by measuring the regeneration limit value of a honeycomb fired body that constitutes the honeycomb structured body.

For measuring the regeneration limit value, first, the honeycomb fired body according to the example or the comparative example was placed in the casing 31 with the mat 32 therebetween, and the engine was operated at a rotating speed of 3000 min⁻¹ with a torque of 50 Nm for a predetermined time to capture a predetermined amount of particulates. Thereafter, a regenerating process to forcibly burn particulates (PM) was performed by operating the engine at a rotating speed of 4000 min⁻¹ and full load, and then operating the engine at a rotating speed of 1050 min⁻¹ with a torque of 30 Nm when the filter temperature was held constant at or around 700°C.

The test to perform the regenerating process was repeated by changing the amount of captured PM to investigate whether cracking would occur in the honeycomb fired body. The maximum amount of PM at which cracking did not occur was regarded as the regeneration limit value.

As a result, in the honeycomb fired body according to Example 1, the regeneration limit value was 9.0 g/L, whereas in the honeycomb fired body according to Comparative Example 1, the regeneration limit value was 6.9 g/L. This clearly shows that the regeneration limit value was significantly improved in the honeycomb fired body according to Example 1 in which the large particles of silicon carbide were added to the raw material composition. The unit "g/L" indicates the amount of accumulated PM per unit volume of the honeycomb fired body. The "unit volume" includes the cells of the honeycomb fired body, the cell partition walls, and the outer wall.

### (3) Observation of structure after cracking

In regard to the honeycomb fired bodies according to Example 1 and Comparative Example 1, those in which cracking occurred were cut to observe the cracking portions. SEM images were taken to observe the surface.

Fig. 5 shows a cracking portion of the honeycomb fired body according to Example 1. Observation reveals a crack that was not straight but was largely bent so as to divert large-sized grains.

Fig. 7 is a SEM image showing observation results of a cracking portion where cracking was induced in the honeycomb fired body used in Comparative Example 1.

As is clear from Fig. 7, no large-sized grains were observed in the honeycomb fired body, and a crack was formed in a shape closer to a straight line, compared to the honeycomb fired body of Example 1.

### (4) Checking of performance as honeycomb filter

Exhaust gas purification devices were assembled using the honeycomb structured bodies produced in Example 1 and Comparative Example 1. These exhaust gas purification devices were operated for eight hours while exhaust gas was introduced thereinto, and PM was removed. As a result, both of the honeycomb structured bodies produced in Example 1 and Comparative Example 1 were successfully able to remove PM, and these honeycomb structured bodies were comparable to each other in their performance as filters.

### REFERENCE SIGNS LIST

- 10, 100: honeycomb structured body
- 11: adhesive layer
- 12: peripheral coat layer
- 15: honeycomb aggregated body
- 16: ceramic block
- 20: honeycomb fired body
- 21: exhaust gas introduction cell
- 22: exhaust gas emission cell
- 23: cell partition wall
- 31: casing
- 32: mat
- 33: exhaust gas inlet-side pipe
- 34: exhaust gas outlet-side pipe
- 35: pipe
- 41: engine
- 42: exhaust gas passage

## Claims

1. A method for producing a honeycomb structured body, the method comprising the steps of:
preparing a raw material composition using ceramic particles having a particle size distribution with a peak in each of the following three ranges, as measured based on laser diffractometry: a range of 0.1 µm or more and 1.0 µm or less; a range of more than 1.0 µm and 15 µm or less; and a range of more than 15 µm and 100 µm or less; and
at least molding, degreasing, and firing the raw material composition to produce a porous ceramic honeycomb structured body.

2. The method for producing a honeycomb structured body according to claim 1,
wherein the raw material composition is prepared using a mixture of three types of ceramic particles having a particle size distribution as follows, as measured based on laser diffractometry: ceramic particles having a particle size distribution with a peak in a range of 0.1 µm or more and 1.0 µm or less; ceramic particles having a particle size distribution with a peak in a range of more than 1.0 µm and 15 µm or less; and ceramic particles having a particle size distribution with a peak in a range of more than 15 µm and 100 µm or less.

3. The method for producing a honeycomb structured body according to claim 1 or 2,
wherein the ceramic particles having a particle size distribution with a peak in the range of more than 15 µm and 100 µm or less are flat-shaped ceramic particles.

4. The method for producing a honeycomb structured body according to any one of claims 1 to 3,
wherein the ceramic particles having a particle size distribution with a peak in the range of more than 15 µm and 100 µm or less account for 10 to 60% by weight of all the ceramic particles.

5. The method for producing a honeycomb structured body according to any one of claims 1 to 4,
wherein the preparation of the raw material composition includes adding alumina or a combination of alumina and yttria as a sintering aid.

6. The method for producing a honeycomb structured body according to any one of claims 1 to 5,
wherein the honeycomb structured body to be produced has a porosity of 42 to 70%.

7. The method for producing a honeycomb structured body according to any one of claims 1 to 6,
wherein the preparation of the raw material composition includes adding at least one pore-forming agent selected from the group consisting of spherical acrylic particles, graphite, and balloons of hollow microspheres.

8. The method for producing a honeycomb structured body according to any one of claims 1 to 7,
wherein the ceramic particles are at least one selected from the group consisting of silicon carbide, silicon nitride, titanium carbide, tungsten carbide, molybdenum carbide, tantalum carbide, niobium carbide, vanadium carbide, zirconium carbide, titanium nitride, tantalum nitride, niobium nitride, vanadium nitride, and zirconium nitride.

9. The method for producing a honeycomb structured body according to any one of claims 1 to 8,
the honeycomb structured body to be produced comprising:
a plurality of cells that serve as exhaust gas passages; and
porous cell partition walls defining the cells,
wherein the cells include exhaust gas introduction cells each having an open end on the exhaust gas inlet side and a plugged end on an exhaust gas outlet side, and exhaust gas emission cells each having an open end on the exhaust gas outlet side and a plugged end on an exhaust gas inlet side,
the exhaust gas introduction cells each have an octagonal cross section and the exhaust gas emission cells each have a rectangular cross section in a direction perpendicular to a longitudinal direction of the cells of the honeycomb structured body, and
the exhaust gas introduction cells each have a cross-sectional area larger than that of each exhaust gas emission cell.
